# DEMANDE DE BREVET EUROPEEN

(11) **EP 4 790 013 A1**
(43) Date de publication de la demande: **12.08.2026**
(21) Numéro de dépôt: 26153603.1
(22) Date de dépôt: 22.01.2026
(51) Int. Cl.: B67D 1/12, A47J 31/52, A47J 31/44

(54) **PROCEDE DE COMMANDE D'UN APPAREIL DE PREPARATION DE BOISSONS**

(30) Priorité: 07.02.2025 FR 2501257
(71) Demandeur: SEB S.A., 69130 Ecully (FR)
(72) Inventeur: GALVAN, Thomas, 69134 ECULLY CEDEX (FR); GARNIER-FAYOL, Julien, 69134 ECULLY CEDEX (FR)
(74) Mandataire: SEB Développement

(57) **Abrégé**

Le procédé de commande d'un appareil de préparation de boissons (2) comportant un support de récipient (6), une tête de distribution de boisson (8) par laquelle une boisson confectionnée par l'appareil de préparation de boissons (2) est apte à s'écouler dans un récipient (10) positionné sur le support de récipient (6), et un capteur de distance (11) situé à l'aplomb de l'emplacement de réception (7), le procédé de commande comportant le versage d'une quantité prédéterminée de boisson dans le récipient (10) de manière à recouvrir le fond (10.1) du récipient (10) ; la détermination d'une hauteur utile (H_{U}) du récipient (10) à partir d'au moins une distance verticale mesurée par le capteur de distance (11) ; et le remplissage du récipient (10) avec une boisson confectionnée par l'appareil de préparation de boissons (2).

## Description

### Domaine technique

La présente invention concerne de manière générale un appareil de préparation de boissons, et plus particulièrement une machine à café automatique.

### Etat de la technique

Un appareil de préparation de boissons, et plus particulièrement une machine à café automatique, comprend de façon connue :
- un support de récipient comprenant un emplacement de réception configuré pour supporter un récipient,
- une tête de distribution de boisson pourvue d'au moins une buse de distribution de boisson située à l'aplomb de l'emplacement de réception et par laquelle une boisson confectionnée par l'appareil de préparation de boissons est apte à s'écouler dans un récipient positionné sur l'emplacement de réception, et
- un capteur de distance situé à l'aplomb de l'emplacement de réception et configuré pour mesurer, par exemple optiquement, une distance verticale entre le capteur de distance et un objet situé en dessous du capteur de distance.

Un tel appareil de préparation de boissons permet notamment, lors d'une phase initiale d'un cycle de préparation de boisson, de déterminer la hauteur utile d'un récipient positionné sur l'emplacement de réception à partir de signaux de mesure provenant du capteur de distance, et, lors d'une opération de remplissage du récipient, de déterminer le niveau de remplissage du récipient à partir de signaux de mesure provenant du capteur de distance.

Cependant, lorsque le récipient est par exemple en verre et que le capteur de distance est un capteur optique, une partie du faisceau de mesure émis par le capteur de distance est susceptible de se « disperser » au sein du verre. Ainsi, la hauteur utile déterminée à partir des distances verticales mesurées par le capteur de distance peut être faussée pour certains types de récipient utilisés, ce qui peut conduire à la réalisation de recettes non conformes aux souhaits de l'utilisateur, voire à un débordement de la boisson préparée hors du récipient.

### Résumé de l'invention

La présente invention vise à remédier à ces inconvénients.

Le problème technique à la base de l'invention consiste notamment à fournir un procédé de commande d'un appareil de préparation de boissons, tel qu'une machine à café automatique, qui assure une préparation automatique et optimale de recettes quel que soit le type de récipient utilisé.

A cet effet, la présente invention concerne un procédé de commande d'un appareil de préparation de boissons comportant un support de récipient, une tête de distribution de boisson pourvue d'au moins une buse de distribution de boisson située à l'aplomb d'un emplacement de réception prévu sur le support de récipient et par laquelle une boisson confectionnée par l'appareil de préparation de boissons est apte à s'écouler dans un récipient positionné sur l'emplacement de réception, et un capteur de distance situé à l'aplomb de l'emplacement de réception et configuré pour mesurer, par exemple optiquement, une distance verticale entre le capteur de distance et un objet situé en dessous du capteur de distance, le procédé de commande comportant :
- une étape de détermination consistant à déterminer une hauteur utile d'un récipient positionné sur le support de récipient à partir d'au moins une distance verticale mesurée par le capteur de distance, et
- une étape de remplissage consistant à remplir le récipient avec une boisson confectionnée par l'appareil de préparation de boissons, et
- une étape de versage réalisée préalablement à l'étape de détermination et consistant à verser une quantité prédéterminée de boisson dans le récipient de manière à recouvrir le fond du récipient.

Une telle étape de versage permet de recouvrir le fond du récipient avec une boisson qui est généralement au moins en partie opaque, et donc de mesurer avec une précision satisfaisante la hauteur utile du récipient positionné sur l'emplacement de réception, y compris lorsque le capteur de distance est un capteur optique et que le récipient est en verre. En effet, la présence d'une boisson au moins en partie opaque dans le fond du récipient évite, ou du moins limite sensiblement, les risques de « dispersion » du faisceau de mesure émis par le capteur de distance au sein du matériau formant le récipient. Il est important de noter que la quantité de boisson versée dans le récipient lors de l'étape de versage est relativement faible, de telle sorte qu'elle n'impacte pas de manière préjudiciable la détermination de la hauteur utile du récipient. Le procédé de commande selon la présente invention permet donc de réaliser avec précision des recettes sélectionnées par un utilisateur, et ce quel que soit le type de récipient choisi par ce dernier.

Le procédé de commande peut en outre présenter une ou plusieurs des caractéristiques suivantes, prises seules ou en combinaison.

Selon un mode de réalisation de l'invention, l'étape de remplissage est réalisée en fonction de la hauteur utile déterminée, et consiste donc à remplir le récipient avec une boisson confectionnée par l'appareil de préparation de boissons en fonction de la hauteur utile déterminée.

Selon un mode de réalisation de l'invention, la quantité prédéterminée est comprise entre 3 et 10 ml, et par exemple entre 3 et 5 ml.

Selon un mode de réalisation de l'invention, le procédé de commande comporte une étape de détection consistant à détecter automatiquement la présence d'un récipient sur l'emplacement de réception à partir d'au moins une distance verticale mesurée par le capteur de distance.

Selon un mode de réalisation de l'invention, le procédé de commande comporte une étape d'autorisation consistant à autoriser la réalisation d'un cycle de préparation de boisson, et notamment la réalisation de l'étape de remplissage, uniquement si la présence d'un récipient a été détectée lors de l'étape de détection.

Selon un mode de réalisation de l'invention, l'étape de détection comporte les étapes suivantes :
- mesure, à l'aide du capteur de distance et par exemple lors d'une phase initiale d'un cycle de préparation de boisson, d'une distance verticale entre le capteur de distance et un objet situé en dessous du capteur de distance,
- comparaison de la distance verticale mesurée avec une distance de référence correspondant à la distance verticale entre le capteur de distance et le support de récipient, et
- détection de la présence d'un récipient sur l'emplacement de réception (et donc détermination que l'objet situé sous le capteur de distance est un récipient et non pas le support de récipient) si la distance verticale mesurée est inférieure à la distance de référence.

Selon une mode de réalisation de l'invention, le procédé de commande comporte une étape de mesure consistant à mesurer, à l'aide du capteur de distance et en l'absence de récipient positionné sur l'emplacement de réception, la distance de référence, à savoir la distance verticale entre le capteur de distance et le support de récipient.

Selon une mode de réalisation de l'invention, la distance de référence est variable et varie en fonction du réglage en hauteur de la tête de distribution de boisson.

Selon une mode de réalisation de l'invention, l'étape de détermination comprend une mesure, à l'aide du capteur de distance, d'au moins une distance verticale entre le capteur de distance et la surface libre de la boisson recouvrant le fond du récipient.

Selon un mode de réalisation de l'invention, l'étape de détermination comprend les étapes suivantes :
- déplacement vertical de la tête de distribution de boisson par rapport au support de récipient de telle sorte que la tête de distribution de boisson vienne en appui contre un bord périphérique supérieur du récipient,
- mesure, à l'aide du capteur de distance et avec la tête de distribution de boisson en appui contre le bord périphérique supérieur du récipient, d'une distance verticale entre le capteur de distance et la surface libre de la boisson recouvrant le fond du récipient, et
- détermination de la hauteur utile du récipient à partir de la distance verticale mesurée.

Selon un mode de réalisation de l'invention, la tête de distribution de boisson comporte un organe d'appui, tel qu'un doigt d'appui, configuré pour venir en butée contre le bord périphérique supérieur d'un récipient positionné sur l'emplacement de réception.

Selon un mode de réalisation de l'invention, l'appareil de préparation de boissons comporte un capteur par contact, tel qu'un commutateur électrique et notamment un microrupteur, fixé à la tête de distribution de boisson et configuré pour détecter automatiquement lorsque la tête de distribution de boisson est en appui contre un bord périphérique supérieur d'un récipient.

Selon un mode de réalisation de l'invention, le capteur par contact est un commutateur électrique et est configuré pour occuper un premier état, et par exemple pour être activé ou désactivé, lorsque la tête de distribution de boisson est située à distance du récipient, et pour occuper un deuxième état, et par exemple pour être désactivé ou activé, lorsque la tête de distribution de boisson est en appui sur le bord périphérique supérieur du récipient.

Selon un mode de réalisation de l'invention, l'appareil de préparation de boissons comporte un mécanisme de déplacement de tête configuré pour déplacer en translation la tête de distribution de boisson selon une direction de translation qui est sensiblement verticale, le mécanisme de déplacement de tête comportant un moteur d'entraînement.

Selon un mode de réalisation de l'invention, le procédé de commande comprend une étape de mesure d'intensité consistant à mesurer l'intensité du courant électrique appliqué au moteur d'entraînement, et une étape de détection d'appui configurée pour détecter automatiquement que la tête de distribution de boisson est en appui contre un bord périphérique supérieur d'un récipient lorsque l'intensité mesurée dépasse une valeur de seuil d'intensité prédéterminée.

Selon un mode de réalisation de l'invention, l'étape de déplacement vertical est réalisée de manière automatique ou manuellement.

Selon un mode de réalisation de l'invention, l'étape de déplacement vertical consiste à abaisser verticalement la tête de distribution de boisson en direction du support de récipient.

Selon un autre mode de réalisation de l'invention, l'étape de déplacement vertical consiste à relever verticalement le support de récipient en direction de la tête de distribution de boisson.

Selon un mode de réalisation de l'invention, l'étape de détermination comprend les étapes suivantes :
- mesure, à l'aide du capteur de distance positionné à l'aplomb du fond du récipient, d'une première distance verticale entre le capteur de distance et la surface libre de la boisson qui recouvre le fond du récipient,
- déplacement en translation du capteur de distance selon une direction de déplacement qui est sensiblement horizontale de manière à positionner le capteur de distance à l'aplomb d'un bord périphérique supérieur du récipient,
- mesure, à l'aide du capteur de distance, d'une deuxième distance verticale entre le capteur de distance et le bord périphérique supérieur du récipient, et
- détermination de la hauteur utile du récipient à partir de la première distance verticale mesurée et de la deuxième distance verticale mesurée, et par exemple à partir d'une soustraction entre la première distance verticale mesurée et la deuxième distance verticale mesurée.

Selon un mode de réalisation de l'invention, l'étape de déplacement en translation est réalisée automatiquement ou manuellement.

Selon un mode de réalisation de l'invention, le procédé de commande comporte une étape de positionnement réalisée entre l'étape de détermination et l'étape de remplissage et consistant à positionner, par exemple manuellement ou automatiquement, le capteur de distance à l'aplomb du fond du récipient.

Selon un mode de réalisation de l'invention, le procédé de commande comprend :
- une étape de mesure réalisée lors de l'étape de remplissage et consistant à mesurer, à l'aide du capteur de distance et par exemple périodiquement ou en continu, une distance verticale entre le capteur de distance et une surface libre de la boisson contenue dans le récipient,
- une étape de calcul consistant à calculer une hauteur de liquide dans le récipient, et donc un niveau de remplissage du récipient, à partir de la distance verticale mesurée entre le capteur de distance et la surface libre de la boisson contenue dans le récipient, et
- une étape d'interruption de remplissage consistant à interrompre l'étape de remplissage lorsque la hauteur de liquide calculée atteint une hauteur prédéterminée qui est définie en fonction de la hauteur utile déterminée et d'une recette à réaliser.

Selon un mode de réalisation de l'invention, le procédé de commande comprend une étape d'interruption de sécurité consistant à interrompre l'étape de remplissage si la hauteur de liquide calculée atteint une valeur de seuil critique définie en fonction de la hauteur utile déterminée, et par exemple égale à la hauteur utile déterminée moins une valeur prédéterminée comprise entre 10 et 20 mm, et par exemple sensiblement égale à 15mm.

Selon un mode de réalisation de l'invention, le procédé de commande comprend :
- une étape de sélection consistant à sélectionner, par exemple manuellement ou automatiquement, une recette à réaliser,
- une étape d'adaptation consistant à adapter automatiquement la recette sectionnée en fonction de la hauteur utile déterminée.

Selon un mode de réalisation de l'invention, le procédé de commande comporte une étape de pré-sélection consistant à limiter les recettes proposées à l'utilisateur en fonction de la hauteur utile déterminée.

Selon un mode de réalisation de l'invention, le capteur de distance est monté sur la tête de distribution de boisson.

Selon un mode de réalisation de l'invention, le capteur de distance est situé à proximité de l'au moins une buse de distribution de boisson.

Selon un mode de réalisation de l'invention, le capteur de distance est configuré pour être orienté vers le bas.

Selon un mode de réalisation de l'invention, le capteur de distance est configuré pour mesurer une distance entre le capteur de distance et un objet situé en dessous du capteur de distance selon une direction de mesure qui est sensiblement verticale. De façon avantageuse, la direction de mesure est fixe.

Selon un mode de réalisation de l'invention, le capteur de distance est un capteur optique apte à émettre un faisceau lumineux, tel qu'un faisceau laser, en direction d'un récipient positionné sur l'emplacement de réception, et apte à détecter un faisceau réfléchi par le récipient ou son contenu.

Selon un mode de réalisation de l'invention, le capteur de distance est un capteur de temps de vol (capteur TOF).

Selon un mode de réalisation de l'invention, le capteur de distance est fixe par rapport à l'au moins une buse de distribution de boisson.

Selon un mode de réalisation de l'invention, le capteur de distance est déplaçable en translation, par rapport à l'au moins une buse de distribution de boisson, selon une direction de déplacement qui est sensiblement horizontale.

Selon un mode de réalisation de l'invention, la tête de distribution de boisson est réglable en hauteur.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
Les figures 1 à 5 sont des vues en perspective avant d'un appareil de préparation de boissons selon un premier mode de réalisation de l'invention, montrant l'appareil de préparation de boissons dans différentes phases successives d'un cycle de préparation de boisson ;

Les figures 6 à 10 sont des vues en perspective avant d'un appareil de préparation de boissons selon un deuxième mode de réalisation de l'invention, montrant l'appareil de préparation de boissons dans différentes phases successives d'un cycle de préparation de boisson.

### Description détaillée

On notera que dans ce document, les termes « horizontal », « supérieur », « au-dessus » et « sous » employés pour décrire l'appareil de préparation de boissons font références à l'appareil de préparation de boissons en situation d'usage lorsqu'il repose sur une surface qui est plane et horizontale, telle qu'un plan de travail.

A défaut de stipulation contraire, le terme « sensiblement » signifie, dans le présent document, « exactement ou à 10% ou à 10° près ».

Dans le présent document, on entend par « hauteur utile » d'un récipient la distance verticale entre un bord périphérique supérieur du récipient et un fond dudit récipient.

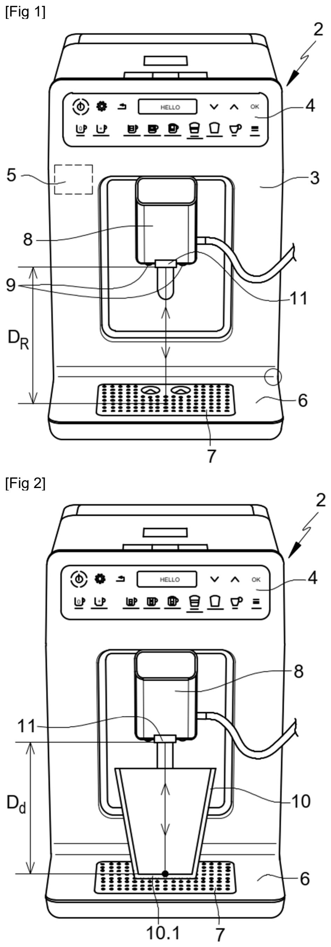

Les figures 1 à 5 représentent un appareil de préparation de boissons 2, tel qu'une machine à café automatique, selon un premier mode de réalisation de l'invention. L'appareil de préparation de boissons 2 est plus particulièrement adaptée pour préparer notamment du café, des boissons lactées ou encore du thé.

L'appareil de préparation de boissons 2 comprend un boîtier 3, par exemple de forme générale parallélépipédique, configuré pour reposer sur une surface de travail, telle qu'un plan de travail. Le boîtier 3 renferme les principaux éléments fonctionnels de l'appareil de préparation de boissons 2.

Le boîtier 3 comporte une façade qui est avantageusement équipée d'une interface utilisateur 4, par exemple pourvue d'un écran d'affichage, permettant à un utilisateur de sélectionner différents cycles de fonctionnement de l'appareil de préparation de boissons 2. L'appareil de préparation de boissons 2 comporte également une unité électronique de commande 5 reliée fonctionnellement à l'interface utilisateur 4 et configurée pour commander le fonctionnement de l'appareil de préparation de boissons 2 notamment en fonction des cycles de fonctionnement sélectionnés par un utilisateur.

L'appareil de préparation de boissons 2 comprend en outre un support de récipient 6 équipé d'une grille de support définissant un emplacement de réception 7 sur lequel un récipient, tel qu'une tasse, peut être positionné, et une tête de distribution de boisson 8 pourvue d'au moins une buse de distribution de boisson 9 située à l'aplomb de l'emplacement de réception 7 et par laquelle une boisson confectionnée par l'appareil de préparation de boissons 2 est apte à s'écouler dans un récipient 10 positionné sur le support de récipient 6.

De façon avantageuse, la tête de distribution de boisson 8 est réglable en hauteur. A cet effet, l'appareil de préparation de boissons 2 peut par exemple être pourvu d'un mécanisme de déplacement de tête (non représenté sur les figures) configuré pour déplacer en translation la tête de distribution de boisson 8 selon une direction de translation qui est sensiblement verticale. Le mécanisme de déplacement de tête comporte avantageusement un moteur d'entraînement couplé à un chariot disposé dans le boîtier 3 et sur lequel est montée la tête de distribution de boisson 8. Toutefois, selon une variante de réalisation de l'appareil de préparation de boissons 2, ce dernier pourrait être dépourvu d'un tel mécanisme de déplacement de tête et le réglage en hauteur de la tête de distribution de boisson 8 pourrait être réalisé manuellement.

L'appareil de préparation de boissons 2 comprend de plus un capteur de distance 11 situé à l'aplomb de l'emplacement de réception 7 et configuré pour mesurer une distance verticale entre le capteur de distance 11 et un objet situé en dessous du capteur de distance 11. Le capteur de distance 11 est plus particulièrement configuré pour être orienté verticalement et vers le bas. De façon avantageuse, le capteur de distance 11 n'est pas inclinable par rapport à la verticale.

Selon le mode de réalisation représenté sur les figures 1 à 5, le capteur de distance 11 est monté sur la tête de distribution de boisson 8 et est situé à proximité de la ou des buse(s) de distribution de boisson 9. De façon avantageuse, le capteur de distance 11 est un capteur de temps de vol (capteur TOF), et est apte à émettre un faisceau lumineux, tel qu'un faisceau laser, en direction d'un récipient 10 positionné sur l'emplacement de réception 7, et est apte à détecter un faisceau lumineux réfléchi par le récipient 10 ou son contenu.

Selon le mode de réalisation représenté sur les figures 1 à 5, le capteur de distance 11 est fixe par rapport à la ou les buse(s) de distribution de boisson 9.

L'unité électronique de commande 5 est plus particulièrement configurée pour déterminer une hauteur utile H_{U} d'un récipient 10 positionné sur le support de récipient 6 à partir d'au moins une distance verticale mesurée par le capteur de distance 11 et entre celui-ci et le récipient 10, et pour calculer, lors d'une opération de remplissage d'un récipient 10, une hauteur de liquide H_{L} dans le récipient 10, et donc un niveau de remplissage du récipient 10, à partir d'une distance verticale mesurée entre le capteur de distance 11 et une surface libre de la boisson contenue dans le récipient 10.

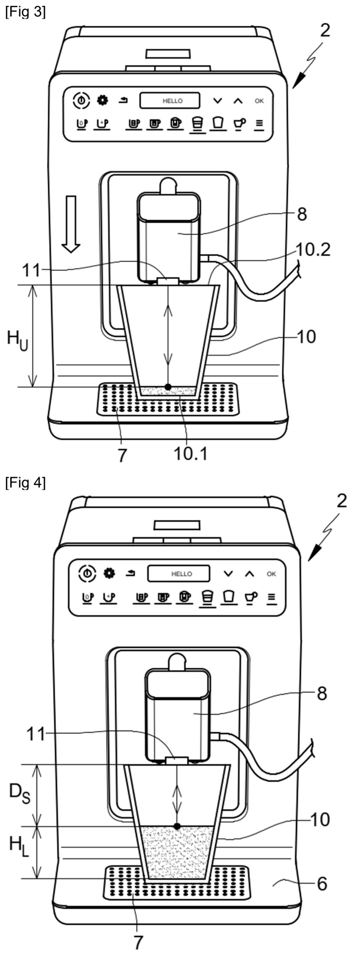

Un procédé de commande d'un tel appareil de préparation de boissons 2 est décrit ci-après. Un tel procédé de commande comporte :
- une étape de détection (voir la figure 2) consistant à détecter automatiquement la présence d'un récipient 10 sur l'emplacement de réception 7 à partir d'au moins une distance verticale mesurée par le capteur de distance 11,
- une étape de versage (voir la figure 3) consistant à verser une quantité prédéterminée de boisson (par exemple comprise entre 3 et 10 ml et avantageusement entre 3 et 5 ml) dans le récipient 10 positionné sur le support de récipient 6 de manière à recouvrir entièrement le fond 10.1 du récipient 10,
- une étape de détermination (voir la figure 3) réalisée postérieurement à l'étape de versage et consistant à déterminer une hauteur utile H_{U} du récipient 10 positionné sur le support de récipient 6 à partir d'au moins une distance verticale mesurée par le capteur de distance 11,
- une étape de remplissage (voir la figure 4) réalisée postérieurement à l'étape de détermination et consistant à remplir le récipient 10 avec une boisson confectionnée par l'appareil de préparation de boissons 2,
- une étape de mesure réalisée lors de l'étape de remplissage et consistant à mesurer, à l'aide du capteur de distance 11 et par exemple périodiquement ou en continu, une distance verticale Ds entre le capteur de distance 11 et une surface libre de la boisson contenue dans le récipient 10,
- une étape de calcul consistant à calculer une hauteur de liquide H_{L} dans le récipient 10, et donc un niveau de remplissage du récipient 10, à partir de la distance verticale Ds mesurée entre le capteur de distance 11 et la surface libre de la boisson contenue dans le récipient 10, et
- une étape d'interruption de remplissage consistant à interrompre l'étape de remplissage lorsque la hauteur de liquide H_{L} calculée atteint une hauteur prédéterminée qui est définie en fonction de la hauteur utile H_{U} déterminée et de la recette à réaliser.

Selon le premier mode de réalisation de l'invention, l'étape de détection comporte les étapes suivantes :
- mesure, à l'aide du capteur de distance 11, d'une distance verticale, également nommé distance de détection Dd, entre le capteur de distance 11 et le récipient 10 positionné sur l'emplacement de réception 7,
- comparaison de ladite distance verticale Dd mesurée avec une distance de référence D_{R} correspondant à la distance verticale entre le capteur de distance 11 et le support de récipient 6, et
- détection de la présence du récipient 10 sur l'emplacement de réception 7 si la distance verticale Dd mesurée est inférieure à la distance de référence D_{R} (une telle différence de distance est due à l'épaisseur du fond du récipient 10).

De façon avantageuse, le procédé de commande comporte une étape de mesure (voir la figure 1), dite étape de mesure à vide, qui est réalisée préalablement à l'étape de détection et qui consiste à mesurer, à l'aide du capteur de distance 11 et en l'absence de récipient 10 positionné sur l'emplacement de réception 7, la distance de référence D_{R}, à savoir la distance verticale entre le capteur de distance 11 et le support de récipient 6. De façon avantageuse, la distance de référence D_{R} est variable et varie en fonction du réglage en hauteur de la tête de distribution de boisson 8.

Selon le premier mode de réalisation de l'invention, l'étape de détermination comprend les étapes suivantes :
- déplacement vertical de la tête de distribution de boisson 8 par rapport au support de récipient 6 de telle sorte que la tête de distribution de boisson 8 vienne en appui contre un bord périphérique supérieur 10.2 du récipient 10 (voir la figure 3),
- mesure, à l'aide du capteur de distance 11 et avec la tête de distribution de boisson 8 en appui contre le bord périphérique supérieur 10.2 du récipient 10, d'une distance verticale entre le capteur de distance 11 et la surface libre de la boisson recouvrant le fond 10.1 du récipient 10, et
- détermination de la hauteur utile H_{U} du récipient 10 à partir de ladite distance verticale mesurée entre le capteur de distance 11 et le fond 10.1 du récipient 10.

Par exemple, si le capteur de distance 11 est situé à la même altitude que la partie de la tête de distribution de boisson 8 qui est apte à prendre appui sur le bord périphérique supérieur 10.2 du récipient 10, alors la distance verticale mesurée entre le capteur de distance 11 et le fond 10.1 du récipient 10 est égale à la hauteur utile H_{U} du récipient 10.

Par contre, si le capteur de distance 11 et la partie de la tête de distribution de boisson 8, qui est apte à prendre appui sur le bord périphérique supérieur 10.2 du récipient 10, sont décalés verticalement l'une de l'autre d'une distance de décalage, alors la hauteur utile H_{U} du récipient 10 est égale à la distance verticale mesurée à laquelle est ajoutée ou soustraite la distance de décalage (en fonction de la position relative entre la portion d'appui et le capteur de distance 11) qui est connue par construction.

De façon avantageuse, la tête de distribution de boisson 8 peut comporter un organe d'appui (non représenté sur les figures), tel qu'un doigt d'appui, configuré pour venir en butée contre le bord périphérique supérieur 10.2 d'un récipient 10 positionné sur l'emplacement de réception 7.

Si l'appareil de préparation de boissons 2 est dépourvu d'un mécanisme de déplacement de tête apte à déplacer verticalement la tête de distribution de boisson 8, alors l'étape de déplacement vertical est réalisée manuellement et consiste à abaisser verticalement la tête de distribution de boisson 8 en direction du support de récipient 6. Cependant, selon une variante de réalisation de l'invention, l'étape de déplacement vertical pourrait consistes à relever verticalement le support de récipient 6 en direction de la tête de distribution de boisson 8.

Au contraire, si l'appareil de préparation de boissons 2 est pourvu d'un mécanisme de déplacement de tête apte à déplacer verticalement la tête de distribution de boisson 8, alors l'étape de déplacement vertical consiste à commander le fonctionnement du moteur d'entraînement, appartenant au mécanisme de déplacement de tête, de manière à déplacer la tête de distribution de boisson 8 en direction du récipient 10. De façon avantageuse, le procédé de commande comporte une étape de détection d'appui consistant à détecter automatiquement que la tête de distribution de boisson 8 est en appui sur le bord périphérique supérieur 10.2 du récipient 10, et une étape d'arrêt consistant à arrêter le fonctionnement du moteur d'entraînement dès qu'un appui de la tête de distribution de boisson 8 sur le bord périphérique supérieur 10.2 du récipient 10 a été détecté.

Afin de détecter un tel appui, l'appareil de préparation de boissons 2 peut par exemple comporter un capteur par contact (non représenté sur les figures), tel qu'un commutateur électrique et notamment un microrupteur, fixé à la tête de distribution de boisson 8 et configuré pour détecter automatiquement lorsque la tête de distribution de boisson 8 est en appui contre le bord périphérique supérieur 10.2 d'un récipient 10 positionné sur l'emplacement de réception 7. Le capteur par contact peut par exemple être un commutateur électrique et être configuré pour occuper un premier état, et par exemple pour être activé ou désactivé, lorsque la tête de distribution de boisson 8 est située à distance du récipient 10, et pour occuper un deuxième état, et par exemple pour être désactivé ou activé, lorsque la tête de distribution de boisson 8 est en appui sur le bord périphérique supérieur 10.2 du récipient 10.

Selon une variante de réalisation de l'invention, le procédé de commande pourrait comprendre une étape de mesure d'intensité consistant à mesurer l'intensité du courant électrique appliqué au moteur d'entraînement, et l'étape de détection d'appui pourrait consister à détecter automatiquement que la tête de distribution de boisson 8 est en appui contre un bord périphérique supérieur 10.2 d'un récipient 10 lorsque l'intensité mesurée dépasse une valeur de seuil d'intensité prédéterminée.

Selon un mode de réalisation de l'invention, le procédé de commande comprend également une étape d'interruption de sécurité consistant à interrompre l'étape de remplissage si la hauteur de liquide H_{L} calculée atteint une valeur de seuil critique définie en fonction de la hauteur utile H_{U} déterminée, et par exemple égale à la hauteur utile H_{U} déterminée moins une valeur prédéterminée comprise entre 10 et 20 mm, et par exemple sensiblement égale à 15mm. Une telle étape d'interruption de sécurité permet d'éviter tout risque de débordement de boisson hors du récipient.

Selon un mode de réalisation de l'invention, le procédé de commande peut en outre comprendre :
- une étape de sélection consistant à sélectionner, par exemple manuellement ou automatiquement, une recette à réaliser, et
- une étape d'adaptation consistant à adapter automatiquement la recette sectionnée en fonction de la hauteur utile H_{U} déterminée.

Une telle configuration du procédé de commande selon la présente invention permet d'ajuster la quantité de boisson introduite dans le récipient en fonction de la hauteur utile H_{U} du récipient 10 positionné sur l'emplacement de réception 7, et donc de respecter précisément une recette sélectionnée par un utilisateur, et par exemple les proportions des différents ingrédients de la recette sélectionnée (par exemple la proportion de café, la proportion de lait et la proportion de mousse de lait).

Selon un mode de réalisation de l'invention, le procédé de commande pourrait comporter également une étape de pré-sélection réalisé postérieurement à l'étape de détermination et consistant à limiter les recettes proposées à l'utilisateur, via l'interface utilisateur 4, en fonction de la hauteur utile H_{U} déterminée. Ces dispositions permettent d'éviter la sélection, par l'utilisateur, d'une recette qu'il n'est pas possible de réaliser avec le récipient positionné sur l'emplacement de réception 7 (par exemple la réalisation d'un chocolat chaud ou d'un café allongé ne serait pas proposée à l'utilisateur si le récipient 10 détecté est une tasse pour ristretto).

Selon un mode de réalisation de l'invention, le procédé de commande pourrait comporter une étape d'autorisation consistant à autoriser la réalisation d'un cycle de préparation de boisson, et notamment la réalisation de l'étape de remplissage, uniquement si la présence d'un récipient 10 a été détectée lors de l'étape de détection.

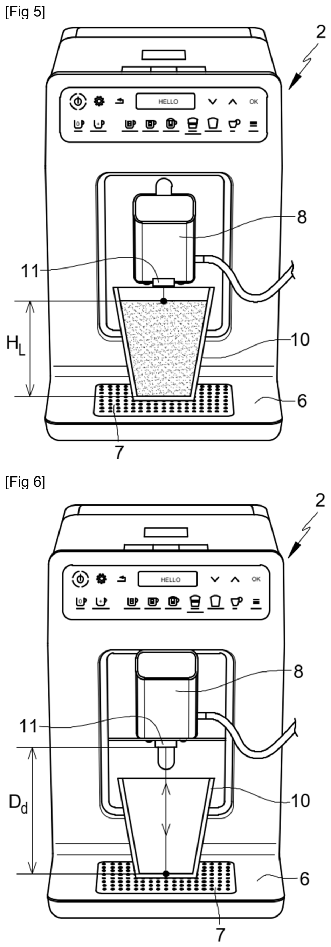

Les figures 6 à 10 représentent un appareil de préparation de boissons 2 selon un deuxième mode de réalisation de l'invention qui diffère du premier mode de réalisation essentiellement en ce que le capteur de distance 11 est déplaçable en translation, par rapport à la ou les buse(s) de distribution de boisson 9, selon une direction de déplacement qui est sensiblement horizontale et qui peut par exemple être perpendiculaire à un plan sagittal de l'appareil de préparation de boissons 2 (et donc un plan vertical qui divise l'appareil de préparation de boissons 2 en une partie gauche et une partie droite) ou parallèle à ce plan sagittal.

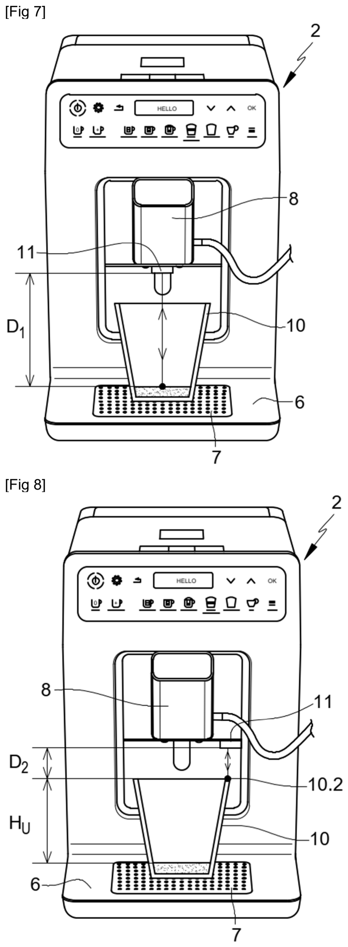

Selon un tel mode de réalisation de l'invention, l'étape de détermination comprend les étapes suivantes :
- mesure, à l'aide du capteur de distance 11 positionné à l'aplomb du fond 10.1 du récipient 10, d'une première distance verticale D1 entre le capteur de distance 11 et le fond 10.1 du récipient 10 qui est recouvert de boisson, et donc plus précisément entre le capteur de distance 11 et la surface libre de la boisson recouvrant le fond 10.1 du récipient 10 (voir la figure 7),
- déplacement en translation du capteur de distance 11 selon la direction de déplacement qui est sensiblement horizontale de manière à positionner le capteur de distance 11 à l'aplomb d'un bord périphérique supérieur 10.2 du récipient 10 (voir la figure 8),
- mesure, à l'aide du capteur de distance 11, d'une deuxième distance verticale D2 entre le capteur de distance 11 et le bord périphérique supérieur 10.2 du récipient 10, et
- détermination de la hauteur utile H_{U} du récipient 10 à partir de la première distance verticale D1 mesurée et de la deuxième distance verticale D2 mesurée, et par exemple à partir d'une soustraction entre la première distance verticale D1 mesurée et la deuxième distance verticale D2 mesurée.

L'étape de déplacement en translation peut par exemple être réalisée automatiquement. A cet effet, l'appareil de préparation de boissons 2 comporte avantageusement un mécanisme de déplacement de capteur (non représenté sur les figures) configuré pour déplacer en translation le capteur de distance 11 selon la direction de déplacement.

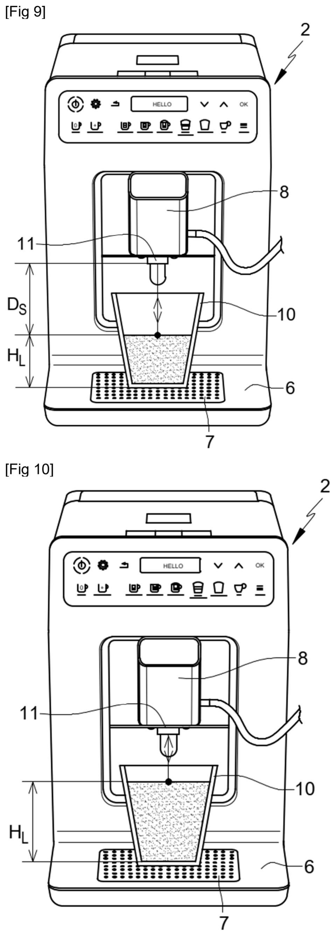

En outre, selon le deuxième mode de réalisation de l'invention, le procédé de commande comporte une étape de positionnement (voir la figure 9) réalisée entre l'étape de détermination et l'étape de remplissage et consistant à positionner, par exemple manuellement ou automatiquement, le capteur de distance 11 à l'aplomb du fond 10.1 du récipient 10.

Il convient d'être noté notamment que l'étape de détection, l'étape de remplissage, l'étape de calcul et l'étape d'interruption de remplissage mises en œuvre pour le procédé de commande relatif au deuxième mode de réalisation de l'invention sont sensiblement identiques aux étapes correspondantes mises en œuvre pour le premier mode de réalisation de l'invention, de telle sorte que ces étapes ne sont pas décrites en détail pour le deuxième mode de réalisation de l'invention.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Procédé de commande d'un appareil de préparation de boissons (2) comportant un support de récipient (6), une tête de distribution de boisson (8) pourvue d'au moins une buse de distribution de boisson (9) située à l'aplomb d'un emplacement de réception (7) prévu sur le support de récipient (6) et par laquelle une boisson confectionnée par l'appareil de préparation de boissons (2) est apte à s'écouler dans un récipient (10) positionné sur l'emplacement de réception (7), et un capteur de distance (11) situé à l'aplomb de l'emplacement de réception (7) et configuré pour mesurer une distance verticale entre le capteur de distance (11) et un objet situé en dessous du capteur de distance (11), le procédé de commande comportant :
- une étape de détermination consistant à déterminer une hauteur utile (H_{U}) d'un récipient (10) positionné sur le support de récipient (6) à partir d'au moins une distance verticale mesurée par le capteur de distance (11), et
- une étape de remplissage consistant à remplir le récipient (10) avec une boisson confectionnée par l'appareil de préparation de boissons (2),
**caractérisé en ce que** le procédé de commande comporte en outre :
- une étape de versage réalisée préalablement à l'étape de détermination et consistant à verser une quantité prédéterminée de boisson dans le récipient (10) de manière à recouvrir le fond (10.1) du récipient (10).

2. Procédé de commande selon la revendication 1, dans lequel l'étape de remplissage est réalisée en fonction de la hauteur utile (H_{U}) déterminée.

3. Procédé de commande selon la revendication 1 ou 2, dans lequel la quantité prédéterminée est comprise entre 3 et 10 ml.

4. Procédé de commande selon l'une quelconque des revendications 1 à 3, lequel comporte une étape de détection consistant à détecter automatiquement la présence d'un récipient (10) sur l'emplacement de réception (7) à partir d'au moins une distance verticale mesurée par le capteur de distance (11).

5. Procédé de commande selon la revendication 4, dans lequel l'étape de détection comporte les étapes suivantes :
- mesure, à l'aide du capteur de distance (11), d'une distance verticale entre le capteur de distance (11) et un objet situé en dessous du capteur de distance (11),
- comparaison de la distance verticale mesurée avec une distance de référence (D_{R}) correspondant à la distance verticale entre le capteur de distance (11) et le support de récipient (6), et
- détection de la présence d'un récipient (10) sur l'emplacement de réception (7) si la distance verticale mesurée est inférieure à la distance de référence (D_{R}).

6. Procédé de commande selon l'une quelconque des revendications 1 à 5, dans lequel l'étape de détermination comprend une mesure, à l'aide du capteur de distance (11), d'au moins une distance verticale entre le capteur de distance (11) et la surface libre de la boisson recouvrant le fond (10.1) du récipient (10).

7. Procédé de commande selon l'une quelconque des revendications 1 à 6, dans lequel l'étape de détermination comprend les étapes suivantes :
- déplacement vertical de la tête de distribution de boisson (8) par rapport au support de récipient (6) de telle sorte que la tête de distribution de boisson (8) vienne en appui contre un bord périphérique supérieur (10.2) du récipient (10),
- mesure, à l'aide du capteur de distance (11) et avec la tête de distribution de boisson (8) en appui contre le bord périphérique supérieur (10.2) du récipient (10), d'une distance verticale entre le capteur de distance (11) et la surface libre de la boisson recouvrant le fond (10.1) du récipient (10), et
- détermination de la hauteur utile (H_{U}) du récipient (10) à partir de la distance verticale mesurée.

8. Procédé de commande selon l'une quelconque des revendications 1 à 6, dans lequel l'étape de détermination comprend les étapes suivantes :
- mesure, à l'aide du capteur de distance (11) positionné à l'aplomb du fond (10.1) du récipient (10), d'une première distance verticale (D1) entre le capteur de distance (11) et la surface libre de la boisson recouvrant le fond (10.1) du récipient (10),
- déplacement en translation du capteur de distance (11) selon une direction de déplacement qui est sensiblement horizontale de manière à positionner le capteur de distance (11) à l'aplomb d'un bord périphérique supérieur (10.2) du récipient (10),
- mesure, à l'aide du capteur de distance (11), d'une deuxième distance verticale (D2) entre le capteur de distance (11) et le bord périphérique supérieur (10.2) du récipient (10), et
- détermination de la hauteur utile (H_{U}) du récipient (10) à partir de la première distance verticale mesurée et de la deuxième distance verticale (D2) mesurée.

9. Procédé de commande selon l'une quelconque des revendications 1 à 8, lequel comprend :
- une étape de mesure réalisée lors de l'étape de remplissage et consistant à mesurer, à l'aide du capteur de distance (11), une distance verticale entre le capteur de distance (11) et une surface libre de la boisson contenue dans le récipient,
- une étape de calcul consistant à calculer une hauteur de liquide (H_{L}) dans le récipient à partir de la distance verticale mesurée entre le capteur de distance (11) et la surface libre de la boisson contenue dans le récipient, et
- une étape d'interruption de remplissage consistant à interrompre l'étape de remplissage lorsque la hauteur de liquide (H_{L}) calculée atteint une hauteur prédéterminée qui est définie en fonction de la hauteur utile (H_{U}) déterminée et d'une recette à réaliser.

10. Procédé de commande selon la revendication 9, lequel comprend une étape d'interruption de sécurité consistant à interrompre l'étape de remplissage si la hauteur de liquide (H_{L}) calculée atteint une valeur de seuil critique définie en fonction de la hauteur utile (H_{U}) déterminée.

11. Procédé de commande selon l'une quelconque des revendications 1 à 10, lequel comprend :
- une étape de sélection consistant à sélectionner une recette à réaliser,
- une étape d'adaptation consistant à adapter automatiquement la recette sectionnée en fonction de la hauteur utile (H_{U}) déterminée.

12. Procédé de commande selon l'une quelconque des revendications 1 à 11, dans lequel le capteur de distance (11) est monté sur la tête de distribution de boisson (8).

13. Procédé de commande selon l'une quelconque des revendications 1 à 12, lequel le capteur de distance (11) est un capteur de temps de vol.
